# DEMANDE DE BREVET EUROPEEN

(11) **EP 1 986 149 A1**
(43) Date de publication de la demande: **29.10.2008**
(21) Numéro de dépôt: 08103663.4
(22) Date de dépôt: 22.04.2008
(51) Int. Cl.: G06Q 30/00

(54) **Procédé de configuration des paramètres d'établissement du profil d'un client d'une plateforme de services de télécommunication.**

(30) Priorité: 27.04.2007 FR 0754735
(71) Demandeur: Alcatel Lucent, 75008 Paris (FR)
(72) Inventeur: Aghasaryan, Armen, 91600, SAVIGNY-SUR-ORGE (FR); Betge-Brezetz, Stéphane, 75015, PARIS (FR); Dupont, Marie-Pascale, 92160, ANTONY (FR)
(74) Mandataire: Hedarchet, Stéphane

(57) **Abrégé**

L'invention concerne un procédé de configuration des paramètres (4) d'établissement du profil d'un client (1) d'une plateforme de services de têiecomniunication, ledit procédé prévoyant de fournir audit client une interface (2) de sélection de critères de confidentialité reiatifs aux services accessibles et de mapper les critères sélectionnés avec des règles de confidentialité préétablîes (5, 6) de sorte à obtenir des paramètres (4) d'établissement du profil du client (1) qui soient conformes aux souhaits dudit client L'invention concerne également une application pour configurer des paramètres (4) d'établissement du profil d'un client (1) d'une plateforme de services de télécommunication.

## Description

L'invention concerne un procédé de configuration des paramètres d'établissement du profil d'un client (processus de profiling en anglais) d'une plateforme de services de télécommunication, dans lequel les critères sélectionnés par le client sont mappés avec des règles de confidentialité pour être conformes aux souhaits du client.

L'invention concerne également une application pour configurer des paramètres d'établissement du profil d'un client d'une plateforme de services de télécommunication.

Les opérateurs de services de télécommunication cherchent à proposer à leurs clients des services personnalisés en adéquation avec la personnalité et les goûts des dits clients, que ces services concernent, par exemple, la télévision interactive, l'envoi de publicités ou les résultats de recherches faites par les clients.

Pour tenter d'atteindre cette adéquation, les opérateurs établissent le profil de leurs clients relativement aux informations en leur possession, à savoir les centres d'intérêts et les comportements habituels des clients en tant qu'utilisateurs des services. Toutefois, les profils ainsi établis sont fondés sur des critères limités et/ou approximatifs.

De plus, l'établissement du profil des clients est conditionné par l'acceptation du client relativement à l'utilisation de certaines informations. Par ailleurs, les contraintes légales relatives à la confidentialité des informations personnelles (privacy en anglais) limitent également les possibilités d'établissement du profil.

Parallèlement, les utilisateurs du réseau Internet disposent de moyens pour configurer l'établissement de leur profil afin de contrôler la confidentialité des informations arrivant sur leur terminal. Ils peuvent en particulier accepter/refuser les fichiers de type « cookies » (ou programmes mouchards).

Par activation d'un onglet, les utilisateurs peuvent également autoriser/refuser le partage avec des tiers des informations consultées ou intégrées sur un site web.

De tels mécanismes de contrôle de la confidentialité ne sont disponibles que sur Internet et ne permettent pas d'établir un profil diversifié incluant des règles de confidentialité de différentes natures.

Ainsi, il n'existe pas de solution permettant aux clients de plateformes de services de télécommunication de configurer des paramètres afin de déterminer les services qui seront accessibles à l'opérateur pour analyser le comportement du client afin de réaliser son profil (processus de profiling en anglais). En particulier, cela n'existe pas pour l'établissement d'un profil relatif à des services vidéo.

L'invention a pour but de pallier les problèmes de l'art antérieur en proposant un procédé de configuration des paramètres d'établissement du profil d'un client d'une plateforme de services de télécommunication qui sont conformes au souhait du client ainsi qu'à des règles légales et/ou établies par l'opérateur.

A cet effet, et selon un premier aspect, l'invention propose un procédé de configuration des paramétres d'établissement du profil d'un client d'une plateforme de services de télécommunication, ledit procédé prévoyant de fournir audit client une interface de sélection de critères de confidentialité relatifs aux services accessibles et de mapper les critères sélectionnés avec des règles de confidentialité préétablies de sorte à obtenir des paramètres d'établissement du profil du client qui soient conformes aux souhaits dudit client.

Selon un deuxième aspect, l'invention propose une application pour configurer des paramètres d'établissement du profil d'un client d'une plateforme de services de télécommunication, ladite application comprenant une interface permettant au client de sélectionner des critères de confidentialité relatifs aux services accessibles et des moyens de mappage des critères sélectionnés avec des règles de confidentialité préétablies, lesdits moyens étant aptes à délivrer des paramètres d'établissement du profil du client qui sont conformes aux souhaits dudit client.

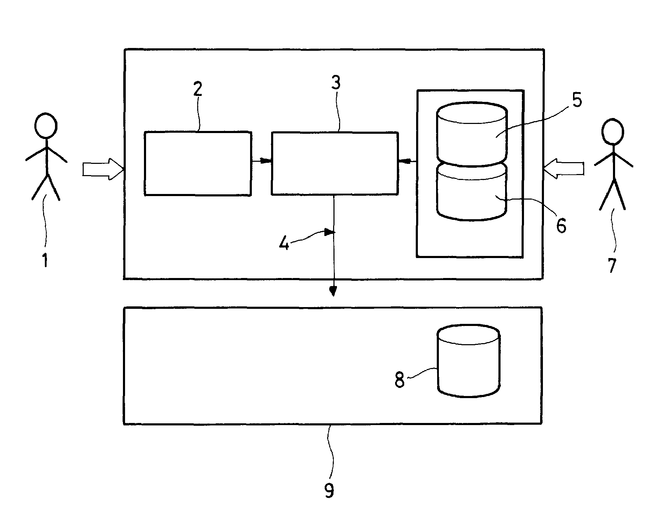

D'autres particularités et avantages de l'invention apparaîtront dans la description qui suit, faite en relation avec la figure jointe qui représente un synopsis général de mise en oeuvre du procédé par une application selon un mode de réalisation de l'invention.

L'invention propose un procédé de configuration des paramètres 4 d'établissement du profil 8 d'un client 1 d'une plateforme de services de télécommunication.

Pour ce faire, le client 1 a accès à une interface 2 visible sur l'écran du terminal connecté à la plateforme de services de télécommunication. Le client sélectionne des critères de confidentialité présentés dans l'interface en cochant des options proposées en fonction du service accessible. Ces critères définissent le degré d'intrusion lors de l'établissement du profil.
Les critères sont notamment relatifs :
- au contenu du service (par exemple les vidéos ou la musique),
- au mode de communication du service (par exemple, par messagerie instantanée).
- à l'environnement d'utilisation du service (par exemple, au domicile du client 1 ou à n'importe quel endroit où il se connecte),
- aux conditions temporelles de fourniture du service (qui déterminent les moments où le client 1 sera profilé),
- à une classification des servies.

Le client 1 détermine ainsi les critères qui seront pris en compte afin de configurer les paramètres 4 nécessaires à l'établissement de son profil 8.

Sur la même interface 2, le client 1 module le degré de confidentialité dans chaque critère en fonction du niveau de confidentialité qu'il accepte relativement aux services qui lui sont accessibles. Le degré de confidentialité dans chaque critère peut être modulé par sélection d'options telles que « Min » et « Max ».

L'opérateur 7 utilise différentes données à fins de mappage des critères sélectionnés par le client 1. Ces données comprennent des règles de confidentialité de deux natures :
- des règles de confidentialité préétablies 5 par l'opérateur 7,
- des règles légales 6 que l'opérateur 7 est tenu de respecter.

Les règles de confidentialité préétablies 5 permettent d'interpréter les sélections faites par le client 1 et ainsi de déterminer les paramètres à prendre en compte afin d'établir le profil.

Ainsi, par exemple, les règles de confidentialité préétablies 5 permettent de transcrire de façon concrète les sélections faites au sein du critère « Vidéo » comme suit :
- « Min » (cette option signifie que le profil du client relativement à son usage des vidéos ne portera que sur les vidéos payantes qu'il regarde (vidéo à la demande VOD)).
- « Max » (cette option signifie que le profil du client portera sur toutes les vidéos qu'il regarde (vidéo à la demande et chaines de télévision), ses habitudes de basculement d'une vidéo à une autre, son éventuel usage d'un système intégré dans son terminal).

Par ailleurs, une règle globale de type « Tous » peut être prévue permet d'associer la même option (« Min » par exemple) à plusieurs critères (vidéo, musique, ...).

Avant de transcrire de façon concrète les sélections faites par le client à l'aide des règles de confidentialité 5, l'opérateur 7 contrôle la cohérence des paramètres pour l'établissement du profil avant leur utilisation. L'opérateur 7 s'assure ainsi que l'ensemble des sélections faites par le client 1 ne conduirait pas à une transcription illogique au regard des règles de confidentialité 5.

L'opérateur 7 utilise également des données relatives aux règles légales 6 qu'il est tenu de respecter lors du mappage des critères sélectionnés par le client 1. Ces règles légales 6 assurent notamment le respect de la législation nationale relative à la protection et à la conservation des données personnelles.

Les critères sélectionnés par le client 1 sont interprétés au regard des règles de confidentialité préétablies 5 et contrôlés au regard des règles légales 6. Ils sont ensuite transmis aux moyens de mappage 3.

Les moyens de mappage 3 procèdent alors au mappage des critères interprétés et contrôlés afin d'obtenir des paramètres 4 d'établissement du profil du client qui sont conformes aux souhaits dudit client.

Ces paramètres 4 sont ensuite transmis au module d'établissement du profil 9 (profiling unit en anglais) afin de configurer la manière dont ledit profil sera établit. Ainsi, grâce à ce profil, l'opérateur pourra améliorer l'adéquation entre les souhaits du client 1 et les services auxquels il aura accès dans la plateforme de services de télécommunication.

L'invention concerne également une application pour configurer des paramètres 4 d'établissement du profil d'un client 1 d'une plateforme de services de télécommunication.

L'application comprend une interface 2 visible sur l'écran du terminal connecté à la plateforme de services de télécommunication. Cette interface permet au client 1 de sélectionner des critères de confidentialité relatifs aux services accessibles.

L'application comprend également des moyens de mappage 3 des critères sélectionnes avec des règles de confidentialité préétablies 5, 6, Ces moyens de mappage 3 sont aptes à délivrer les paramètres 4.

Les paramètres 4 ainsi établis et transmis au module de profiling 9 afin de créer un profil 8, sont conformes aux souhaits du client.

## Revendications

1. Procédé de configuration des paramètres (4) d'établissement du profil d'un client (1) d'une plateforme de services de télécommunication, ledit procédé prévoyant de fournir audit client une interface (2) de sélection de critères de confidentialité relatifs aux services accessibles et de mapper les critères sélectionnés avec des règles de confidentialité préétablies (5, 6) de sorte à obtenir des paramètres (4) d'établissement du profil du client (1) qui soient conformes aux souhaits dudit client.

2. Procédé selon la revendication 1, dans lequel le client (1) sélectionne les critères de confidentialité en cochant des options proposées par interface (2) en fonction du service accessible.

3. Procédé selon la revendication 1 ou 2, dans lequel les critères de confidentialité à sélectionner sont notamment relatifs au contenu du service, à son mode de communication, à l'environnement d'utilisation du service, aux conditions temporelles de fourniture du service et/ou à une classification des services.

4. Procédé selon la revendication 1 à 3, dans lequel le degré de confidentialité dans chaque critère est modulé en fonction du niveau de confidentialité accepté par le client (1) relativement aux services qui lui sont accessibles.

5. Procédé selon la revendication 1 à 4, dans lequel la cohérence des paramètres (4) d'établissement du profil est contrôlée avant leur utilisation.

6. Procédé selon la revendication 1 à 5, dans lequel les règles de confidentialité préétablies comprennent des règles (5) établies par l'opérateur (7).

7. Procédé selon la revendication 1 à 6, dans lequel les règles de confidentialité préétablies comprennent des règles légales (6) que l'opérateur est tenu de respecter.

8. Application pour configurer des paramètres (4) d'établissement du profil d'un client (1) d'une plateforme de services de télécommunication, ladite application comprenant une interface (2) permettant au client (1) de sélectionner des critères de confidentialité relatifs aux services accessibles et des moyens de mappage (3) des critères sélectionnés avec des règles de confidentialité préétablies (5, 6), lesdits moyens (3) étant aptes à délivrer des paramètres (4) d'établissement du profil (8) du client (1) qui sont conformes aux souhaits dudit client.

## Revendications modifiées

### Revendications modifiées conformément à la règle 137(2) CBE.

**1.** Procédé de configuration des paramètres (4) d'établissement du profil d'un client (1) d'une plateforme de services de télécommunication, ledit procédé prévoyant de fournir audit client une interface (2) visible sur l'écran du terminal du client, ladite interface étant agencée pour la sélection de critères de confidentialité relatifs aux services accessibles, et prévoyant de mapper les critères sélectionnés avec des règles de confidentialité préétablies provenant de bases de données (5, 6) de sorte à obtenir des paramètres (4) d'établissement du profil du client (1) qui soient conformes aux souhaits dudit client

**2.** Procédé selon la revendication 1, dans lequel le client (1) sélectionne les critères de confidentialité en clochant des options proposées par l'interface (2) en fonction du service accessible.

**3.** Procédé selon la revendication 1 ou 2, dans lequel les critères de confidentialité à sélectionner sont notamment relatifs au contenu du service, à son mode de communication, à l'environnement d'utilisation du service, aux conditions temporelles de fourniture du service et/ou à une classification des services.

**4.** Procédé selon la revendication 1 à 3. dans lequel le degré de confidentialité dans chaque critère est modulé en fonction du niveau de confidentialité accepté par le disent (1) relativement aux services qui lui sont accessibles.

**5.** Procédé selon la revendication 1 a 4, dans lequel la cohérence des paramètres (4) d'établissement du profil est contrôlée avant leur utilisation.

**6.** Procédé selon la revendication 1 à 5, dans lequel les régies de confidentialité préétablies comprennent des règles (5) établies par l'opérateur (7).

**7.** Procédé selon la revendication 1 à 6, dans lequel les règles de confidentialité préétablies comprennent des règles légales (6) que l'opérateur est tenu de respecter.

**8.** Application pour configurer des paramètres (4) d'établissement du profil d'un client (1) d'une plateforme de services de télécommunication, ladite application comprenant une interface (2) visible sur l'écran du terminal du client et permettant au client (1) de sélectionner des critères de confidentialité relatifs aux services accessibles, lesdits critères de confidentialité provenant de bases de données (5, 6), et comprenant des moyens de mappage (3) des critères avec des règles de confidentialité préétablies (5, 6), lesdits moyens (3) étant aptes à délivrer des paramètres (4) d'établissement du profil (8) du client (1) qui sont conformes aux souhaits dudit client.
